# EUROPÄISCHE PATENTANMELDUNG

(11) **EP 1 199 344 A1**
(43) Veröffentlichungstag der Anmeldung: **24.04.2002**
(21) Anmeldenummer: 00122544.0
(22) Anmeldetag: 16.10.2000
(51) Int. Cl.: C09J 5/00, F16B 11/00

(54) **Schnellmontagesystem unter Verwendung von Klebstoff**

(71) Anmelder: Dilger, Klaus, Univ.-Prof. Dr.-Ing., 52074 Aachen (DE)
(72) Erfinder: Dilger, Klaus, Univ.-Prof. Dr.-Ing., 52074 Aachen (DE)

(57) **Zusammenfassung**

Bei einem Schnellmontagesystem unter Verwendung einer Kombination und Anordnung von mehreren Klebstoffen ist vorgesehen, dass es mindestens eine mit Klebstoff gefüllte Klebstoffaufnahme (9, 10) aufweist, die unter Montagedruck den Klebstoff freigibt, und wobei ferner die Klebstoffaufnahmen (9, 10) zwischen zwei Haftklebekörpern (2,3) angeordnet sind, von denen mindestens einer innen- und außen mit Haftklebstoff versehen ist. Die Haftklebekörper fixieren durch kurzen Montagedruck erfindungsgemäß das Montagesystem, während der ausgetretene Klebstoff härtet und eine strukturelle Verklebung ausbildet.

Bei diesem Schnellmontagesystem wird der jeweilige zur Verwendung geeignete Klebstoff bis zu seiner unmittelbaren Verwendung geschützt bereitgehalten.

Das vorgeschlagene Schnellmontagesystem kombiniert eine sofortige Haftung mit unkritischer Lagerfähigkeit und nach dem Aushärten vorhandener struktureller Klebfestigkeit.

## Beschreibung

Die Erfindung betrifft ein Schnellmontagesystem unter Verwendung einer Kombination von Klebstoffen und deren Anordnung.

Schnellmontagesysteme unter Verwendung von Klebstoffen sind in Form von beidseitig klebenden Streifen allgemein bekannt.

Es sind druckempfindliche Haftklebstoffe (pressure sensitive adhesives) bekannt, die in Form von diversen Haftklebeartikeln eine sofortige Haftung ermöglichen und damit ein Schnellmontagesystem darstellen. Der Nachteil derartiger Produkte ist, dass nur geringe Klebkräfte von zeitlich begrenzter Dauer übertragen werden können. Die übertragbaren Kräfte der Verklebung mit derartigen Haftklebeprodukten ist weit unter dem Bereich, der als strukturell angesehen werden kann. Der Stand der Technik auf dem Gebiet des Haftklebens wird z.B. in I. Benedek, L. J. Heymans, "Pressure Sensitive Adhesive Technology", Marcel Decker Inc., I. Auflage 1997 wiedergegeben. Basispolymere der modernen Haftklebstoffe sind vorwiegend Polyacrylate, Natur- und Synthesekautschuke, Polyester, Polychloropren, Polyisobutene, Polyvinylether, Polyurethane und Polysiloxane, die versetzt mit Zusatzstoffen, wie beispielsweise Harzen, Weichmachern, Füllstoffen und Stabilisatoren, eingesetzt werden.

Die Resistenz gegen Umwelteinflüsse wie Feuchtigkeit und Temperaturänderung von üblichen Haftklebstoffen ist sehr gering. Aus diesem Grund sind Haftklebstoffe mit darin enthaltenden reaktiven Komponenten entwickelt worden. Vor oder nach der Applikation auf das zu fügende Produkt wird, durch Anstoßen der geeigneten Startmechanismen mittels Wärme, Feuchtigkeit, UV, etc., eine Vernetzung ausgebildet. Die Vernetzung der Polymere führt zu einer gesteigerten inneren Festigkeit des Haftklebestoffes, die Produkte können Festigkeiten erreichen, die bis in den strukturellen Bereich gehen können. Die Vernetzung führt aber auch zu einer Verminderung der Klebrigkeit (Tack) des Haftklebprodukts.

Derartige Haftklebstoffkompositionen sind z.B. in Zbigniew Czech, "Vernetzung von Haftklebstoffen auf Polyacrylatbasis", Szczecin, 1999 vorgestellt und untersucht worden. Alle auf einem nicht vollständig vernetzten Polymerblend beruhende Systeme haben den Nachteil einer geringen Lagerstabilität, oft nur von wenigen Tagen und gekühlt wenige Wochen.

Es sind weiterhin Montagesysteme entwickelt worden, bei denen die Klebstoffkomponenten in verkapselter Form vorliegen. Bei Montagedruck oder Temperaturbeaufschlagung werden die Kapseln zerstört und geben einen Mehrkomponentenklebsstoff frei, der, da hochreaktiv, sofort aushärtet (DE 2018791, DE 19502817, DE 4322236). Diese Systeme besitzen keine Soforthaftung. Erst nach einer gewissen Zeitdauer erreicht das System eine ausreichende Anfangsfestigkeit.

Ebenso sind sogenannte mikroverkapselte Systeme bekannt (z.B. US 3369137). Die Herstellung von mikroverkapselten Klebstoffen ist nach wie vor aufwendig und kostenintensiv.

Die Nutzung mikroverkapselter Reaktivkomponenten ist auch in Kombination mit einem Haftklebstoff bekannt (US 3999815, WO 99/55753, EP 914027, EP 467641). Als kritisch bei diesen Systemen muss die ausreichende Stabilität und definierte Zerstörung der Mikrokapseln angesehen werden. Weiterhin ist bei Nutzung von Mehrkomponentenklebstoffen in diesen Systemen unter Umständen die Durchmischung der Reaktivkomponenten nicht ausreichend gewährleistet.

In US 4273827 wird ein Verfahren vorgeschlagen, in dem Haftklebstoffe mit verkapselten viskosen Klebstoffen kombiniert werden. Ziel ist es, verschiedene Werkstoffe mit dem jeweils passenden Klebstoff zu fügen. Die Klebstoffe werden mit einer undurchlässigen Trägerschicht voneinander getrennt gehalten. Dieses Verfahren beinhaltet eine Kombination von verschiedenen Klebstoffen, besitzt aber keine Soforthaftung für das zu fügende Montageteil.

So besteht weiterhin der Bedarf an einem funktionellen Sofortmontagesystem, das ohne die erwähnten Nachteile eine Soforthaftung mit strukturellen Endfestigkeitswerten und einer unkritischen Lagerung bei Raumtemperatur, Feuchtigkeit etc. miteinander vereinbart.

Der hier vorgeschlagenen Erfindung liegt die Aufgabe zu Grunde, ein hochbelastbares Schnellmontagesystem zu schaffen, dass sich bei einfachem Aufbau leicht montieren lässt und das unter Verwendung aller vorkommenden Klebstoffe, auch Mehrkomponenten-Klebstoffen, arbeiten kann.

Diese Aufgabe wird erfindungsgemäß bei einem Schnellmontagesystem der eingangs erwähnten Art dadurch gelöst, dass es mindestens eine mit Klebstoff gefüllte Klebstoffaufnahme aufweist, die unter Montagedruck den Klebstoff freigibt, daß die Klebstoffaufnahme(n) zwischen zwei Haftklebekörpern angeordnet ist (sind), von denen mindestens einer innen- und außenseitig mit Haftklebstoff versehen ist. Der aussen an den Haftklebekörpern vorgesehene Haftklebstoff macht es möglich, das System zunächst in der Montageposition in einfacher Weise zu plazieren. Erst danach wird die tragende Verbindung zwischen der Basis und dem auf ihr festzulegenden Bauteil bewirkt, indem durch Anpreßdruck die Klebstoffaufnahme(n) gesprengt wird/werden, so daß der in ihnen enthaltene Klebstoff austreten und am Rande des Systems wirksam werden kann. Bis zu diesem Zeitpunkt kann der Klebstoff vor Umgebungsluft geschützt gehalten werden. Beim Zusammenpressen des erfindungsgemäßen Schnellmontagesystems kommen, gleichzeitig mit der Zerstörung der Klebstoffaufnahmen, die auch innen mindestens einseitig mit Haftklebstoff beschichteten Haftklebekörper miteinander in Kontakt. Dieser Vorgang führt zu einer definierten Fixierung des Montagesystems durch die Haftklebflächen, während der viskose Klebstoff aushärtet.

Das erfindungsgemäße System kann so ausgebildet sein, dass jede Klebstoffaufnahme eine Sollbruchstelle aufweist. Somit kann die Austrittsstelle des Klebstoffs besonders genau vorbestimmt werden.

Das erfindungsgemäße System kann so ausgebildet sein, dass mindestens eine Klebstoffaufnahme als Membran ausgebildet ist. Eine solche Membran kann allein die Sollbruchstelle einer Klebstoffaufnahme oder aber die Klebstoffaufnahme insgesamt bilden.

Das erfindungsgemäße System kann so ausgebildet sein, dass Klebstoffaufhahme(n) und Haftklebekörper einen gasgefüllten Hohlraum einschließen. Das in diesem Raum enthaltene Gas kann den Klebstoffaustrag und/oder auch das Wirksamwerden des Klebstoffs in gewünschter Weise beeinflussen

Das erfindungsgemäße System kann so ausgebildet sein, dass mindestens zwei Klebstoffaufnahmen für verschiedene Klebstoffkomponenten vorgesehen sind. Dabei kann jeweils eine Klebstoffaufnahme in einer anderen durch eine Membran getrennt angeordnet sein. Es ist aber auch möglich, dass die Klebstoffaufnahmen durch eine Membran getrennt nebeneinander angeordnet sind. Auf diese Weise ist der Einsatz von Zwei- oder Mehrkomponenten-Klebstoffen möglich.

Das erfindungsgemäße System kann so ausgebildet sein, dass es scheiben- oder strangförmig ausgebildet ist und die Klebstoffaufnahme(n) im Randbereich angeordnet (sind). Größe und Formgebung des Systems kann somit den jeweiligen Erfordernissen entsprechend von 1 mm bis 10 cm, vorzugsweise 5 mm bis 5 cm, gewählt werden.

Das erfindungsgemäße System kann so ausgebildet sein, dass es bei strangförmiger Ausbildung klebstofffreie Zonen aufweist, so dass das Unterteilen der Flächen in Einzelstücke möglich ist. Beim Unterteilen kommt es demnach nicht zu einem unerwünschten Klebstoffaustritt.

Das erfindungsgemäße System kann rund oder vieleckig ausgebildet sein.

Gemäß einem weiteren Vorschlag der Erfindung ist vorgesehen, dass die Haftklebekörper folien- oder als formhaltige Scheiben ausgebildet sind.

Das erfindungsgemäße System kann so ausgebildet sein, dass zwischen den Haftklebekörpern Abstandsbegrenzer vorgesehen sind. Somit wird die Zusammendrückbarkeit der Klebstoffaufnahmen zuverlässig vorbestimmt. Erfindungsgemäß ist der Abstandshalter mit bekannten Schnappverbindungen auszustatten, dass die zusammengedrückte Stellung erhalten bleibt.

Vorzugsweise ist das System so ausgebildet, dass die Haftklebekörper außenseitig mit einer ablösbaren Abdeckung versehen sind. Auf diese Weise kann der Haftkleber bis zur Montage des Systems voll funktionsfähig gehalten werden.

Das erfindungsgemäße System kann so ausgebildet sein, dass dem Bereich des Klebstoffaustritts eine Art Mikro-Statik-Mischer vorgelagert ist. Dieser Mischer kann das System ringförmig umgeben. Er dient dazu, eine intensive Vermischung von austretenden Klebstoffkomponenten zu bewirken und damit die volle Wirksamkeit eines Mehrkomponenten-Klebstoffes sicherzustellen.

Nachfolgend werden einige Ausführungsformen des erfindungsgemäßen Schnellmontagesystems anhand von Zeichnungen beschrieben.

Es zeigt:
- Fig. 1: eine erste Ausführungsform des erfindungsgemäßen Schnellmontagesystems mit einer Klebstoffaufnahme für einen Klebstoff,
- Fig. 2: eine zweite Ausführungsform des erfindungsgemäßen Schnellmontagesystems, bei der zwei Klebstoffaufnahmen durch eine Membran getrennt nebeneinander angeordnet sind,
- Fig. 3: eine dritte Ausführungsform des erfindungsgemäßen Schnellmontagesystems, bei der eine Klebstoffaufnahme durch eine Membran getrennt in einer anderen angeordnet ist,
- Fig. 4: eine vierte Ausführungsform mit als formhaltige Scheiben ausgebildeten Haftklebekörpern,
- Fig. 5: eine der Fig. 4 ähnliche weitere Ausführungsform mit einem Abstandsbegrenzer zwischen den Haftklebekörpern und
- Fig. 6: eine der Fig. 3 ähnliche Ausführungsform mit ringförmigem Mikro-Statik-Mischer.

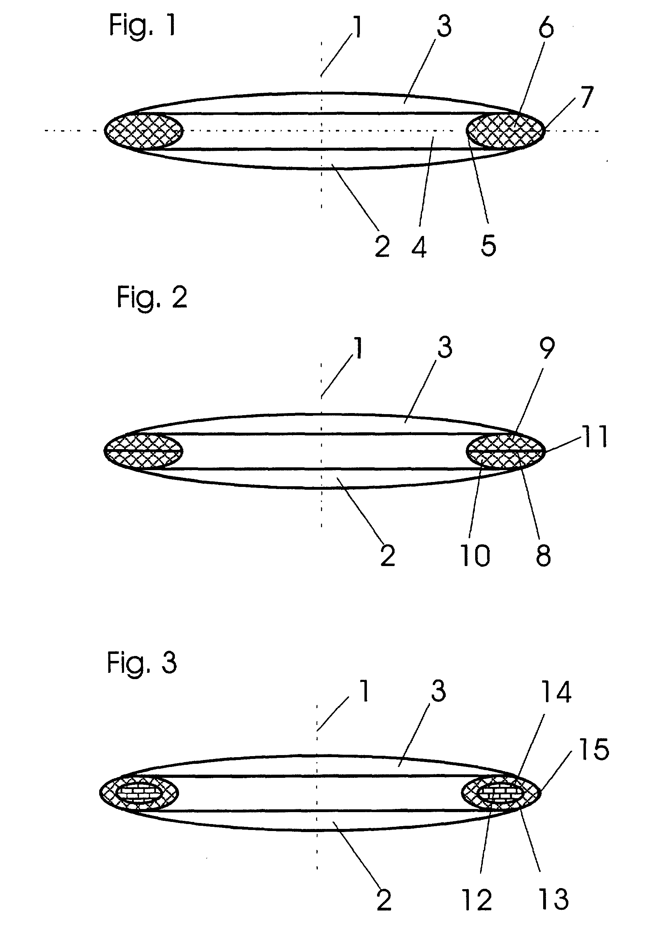

Das Schnellmontagesystem nach Fig. 1 ist bezüglich der Achse 1 rotationssymmetrisch ausgebildet. Es hat einen unteren und einen oberen Haftklebekörper 2, 3. Beide Haftklebekörper sind aus einem folienartigen Material hergestellt und begrenzen diskusartig einen Hohlraum 4. Mindestens einer der Haftklebekörper ist innen- und außenseitig mit Haftklebstoff versehen, auf dem außen eine leicht entfembare Auflage vorgesehen sein kann. An dem Rand des Hohlraums 4 verläuft eine von einer Membran 5 umschlossene, schlauchförmige Klebstoffaufnahme 6. Diese Klebstoffaufnahme 6 kann ringförmig geschlossen sein, aber auch in Umfangsrichtung jeweils für sich abgeschlossene Einzelabschnitte bilden.

In der Klebstoffaufnahme 6 befindet sich ein für den jeweiligen Verwendungszweck geeigneter Klebstoff. Die Membran 5 ist an ihrem am weitesten radial außenliegenden Rand mit einer Sollbruchstelle 7 versehen. Der Hohlraum 4 ist mit einem unter geringem Überdruck stehenden Gas gefüllt.

Wird auf dieses Schnellmontagesystem in Richtung der Achse 1 Druck ausgeübt, so wird dadurch die Soll-Bruchstelle 7 gesprengt, so dass Klebstoff aus der Klebstoffaufnahme 6 in den das Schnellmontagesystem unmittelbar umgebenden Raum austreten kann. Gleichzeitig kommen die Haftklebekörper 2 und 3 miteinander in Kontakt. Aufgrund der mindestens einseitig vorliegenden Beschichtung mit Haftklebstoff verbinden sich die beiden Haftklebekörper und fixieren das zu fügende Montageteil in definierter Weise.

Die Ausführungsform gemäß Fig. 2 unterscheidet sich von derjenigen gemäß Fig. 1 lediglich dadurch, dass hier eine Membran 8 vorgesehen ist, die eine Klebstoffaufnahme 6 gemäß Fig. 1 hier in zwei Klebstoffaufnahmen 9, 10 teilt. Für beide Klebstoffaufnahmen 9, 10 gibt es eine Soll-Bruchstelle 11. Durch Druck in Richtung der Achse 1 wird auch hier die Soll-Bruchstelle gesprengt. Es tritt dann aus jeder dieser Klebstoffaufnahmen 9, 10 eine Komponente eines Zweikomponenten-Klebstoffs aus, so dass im Umfangsbereich des Schnellmontagesystems die gewünschte Klebwirkung erzielt wird.

Das Schnellmontagesystem gemäß Fig. 3 unterscheidet sich von demjenigen gemäß Fig. 1 lediglich dadurch, dass hier eine innere Klebstoffaufnahme 12 in einer äußeren Klebstoffaufnahme 13 platziert ist, wobei die innere Klebstoffaufnahme 12 von einer schlauchförmigen Membran 14 gebildet ist. Auch in diesen beiden Klebstoffaufnahmen 12, 13 können zwei Komponenten eines Zweikomponenten-Klebstoffs untergebracht sein und in der beschriebenen Weise gemeinsam und vermischt durch eine Soll-Bruchstelle 15 in den das Schnellmontagesystem umgebenden Raum ausgedrückt werden können.

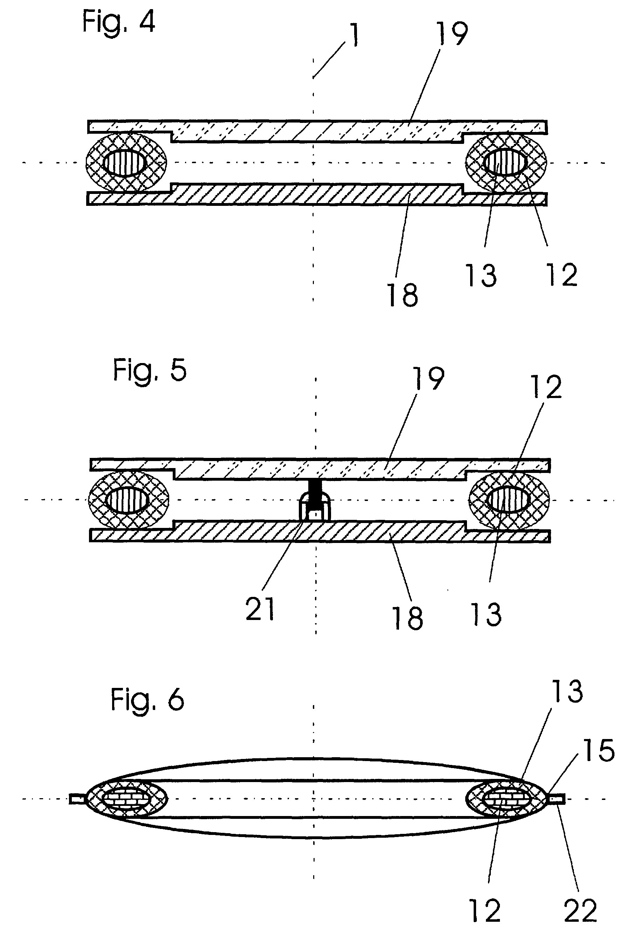

Bei der Ausführungsform gemäß Fig. 4 sind zwei Klebstoffaufnahmen 12, 13 vorgesehen, wie sie anhand von Fig. 3 bereits beschrieben wurden. Bei dieser Ausführungsform sind zwei formstabile scheibenförmige Haftklebekörper 18, 19 vorgesehen, die an ihrem Außenrand die äußere Klebstoffaufnahme 12 halten. Wird in Richtung der Achse 1 auf die Haftklebekörper 18, 19 Druck ausgeübt, so kann damit das Auspressen der in den Klebstoffaufnahmen 12, 13 befindlichen Klebstoffkomponenten herbeigeführt werden. Auch hier sorgt die mindestens einseitige Beschichtung der Innenseiten von 18 und 19 für die definierte Fixierung bis zum Härten des ausgetretenen Klebstoffs

Die Ausführungsform gemäß Fig. 5 unterscheidet sich von der gemäß Fig. 4 lediglich dadurch, dass zwischen den Haftklebekörpern 18, 19 ein Abstandsbegrenzer 21 vorgesehen ist, der eine Bewegung der Haftklebekörper 18, 19 aufeinander zu bei Erreichen des gewünschten Abstandes sperrt. Hierfür bieten sich in bekannter Weise hergestellte Schnappverschlüsse an.

Die Ausführungsform gemäß Fig. 6 weicht von derjenige nach Fig. 3 lediglich dadurch ab, dass das Schnellmontagesystem im Bereich der Soll-Bruchstelle 15 von einem ringförmigen Mikro-Statik-Mischer 22 umgeben ist, welcher die Vermischung von zwei in den Klebstoffaufnahmen 12, 13 befindlichen Klebstoffkomponenten fördert. Derartige Mischer sind in der hier einschlägigen Technik bekannt.

Auch die Schnellmontagesysteme gemäß den Fig. 2 bis 5 können mit einem Mikro-Statik-Mischer gemäß Fig. 6 ausgerüstet sein.

Alle zuvor beschriebenen Ausführungsformen des Schnellmontagesystems sind als diskusartige Rotationskörper dargestellt und beschrieben. Es kommen daneben aber gleichwohl auch oval oder abgerundet eckig ausgebildete Konfigurationen in betracht. Das Schnellmontagesystem kann auch strang-, stab- oder flächenförmig ausgebildet sein, wobei dann die Klebstoffaufnahmen parallel zueinander verlaufen und von entsprechenden Haftklebekörpern umfasst sind. Die Klebstoffaufnahmen können über ihre Länge mehrfach unterbrochen sein. Im Bereich dieser Unterbrechungen kann dann der Strang durchtrennt werden, um auf diese Weise aus dem Strang eine Mehrzahl von Einzelelementen zu bilden.

Auch bei strang-, stab- oder flächenförmiger Ausbildung kann mit Mehrkomponentenkleber gearbeitet werden, wenn z. B. die Klebstoffaufnahmen gemäß den Ausführungsformen der Fig. 2, 3 oder 5 gewählt werden.

Allen Ausführungsformen des erfindungsgemäßen Schnellmontagesystems ist gemeinsam, dass dieses System zunächst aufgrund der Wirkung der Haftklebekörper am Platz der Montage platziert werden kann, wobei es lediglich darauf ankommt, dass das System sein Eigengewicht über das für die Montage ausreichende Zeit an der Basis trägt. Wird dann ein aufzuklebendes Bauelement unter Druck gegen das Schnellmontagesystem aufgebracht, so kommt es zu dem oben beschriebenen Austritt des Klebstoffs, bei gleichzeitiger definierter Fixierung durch die mindestens einseitig innen beschichteten Haftklebekörper. Erst der austretende Klebstoff ergibt dann nach dem Aushärten die gewünschte dauerhaft strukturelle Haltekraft, welche das Element unter Belastung an der Basis hält. Mindestens einer der Haftklebekörper, vorzugsweise aber beide, sind außenseitig mit Haftklebstoff versehen, auf der eine übliche entfernbare Auflage (Abziehfolie) vorgesehen sein kann.

### Bezugszeichenliste

- 1: Achse
- 2: Haftklebekörper
- 3: Haftklebekörper
- 4: Hohlraum
- 5: Membran
- 6: Klebstoffaufnahme
- 7: Sollbruchstelle
- 8: Membran
- 9: Klebstoffaufnahme
- 10: Klebstoffaufnahme
- 11: Sollbruchstelle
- 12: innere Klebstoffaufnahme
- 13: äußere Klebstoffaufnahme
- 14: Membran
- 15: Sollbruchstelle
- 18: Haftklebekörper
- 19: Haftklebekörper
- 20: Sollbruchstelle
- 21: Abstandsbegrenzer
- 22: Mikro-Statik-Mischer

## Patentansprüche

1. Schnellmontagesystem unter Verwendung von Haftklebstoff und einem zweiten Klebstoff, der sich in mindestens einer, unter Montagedruck den zweiten Klebstoff freigebenden Klebstoffaufnahme befindet (6, 9, 10; 12, 13),
**dadurch gekennzeichnet,**
**dass** die Klebstoffaufnahme(n) (6, 9, 10; 12, 13) zwischen zwei Haftklebekörpern (2, 3; 18, 19) angeordnet ist (sind), von denen mindestens einer innen- und außenseitig mit Haftklebstoff versehen ist, und dass die Klebstoffaufnahme(n) sich unter Montagedruck in den das Schnellmontagesystem unmittelbar umgebenden Raum öffnet (öffnen), während die miteinander in Kontakt tretenden Haftklebflächen das System fixieren.

2. Schnellmontagesystem nach Anspruch 1, **dadurch gekennzeichnet, dass** jede Klebstoffaufnahme (6-19,10,12,13) eine Sollbruchstelle (7-11; 15;20) aufweist.

3. Schnellmontagesystem nach Anspruch 1 oder 2, **dadurch gekennzeichnet, dass** mindestens eine Klebstoffaufnahme (6,9,10,12,13) als Membran ausgebildet ist.

4. Schnellmontagesystem nach einem der vorhergehenden Ansprüche, **dadurch gekennzeichnet, dass** Klebstoffaufnahme(n) und Haftklebekörper einen gasgefüllten Hohlraum (4) einschließen.

5. Schnellmontagesystem nach einem der vorhergehenden Ansprüche, **dadurch gekennzeichnet, dass** mindestens zwei Klebstoffaufnahmen (9,10;12,13) für verschiedene Klebstoffkomponenten vorgesehen sind.

6. Schnellmontagesystem nach Anspruch 5, **dadurch gekennzeichnet, dass** jeweils eine Klebstoffaufnahme (12,13) in einer anderen durch eine Membran (14) getrennt angeordnet ist.

7. Schnellmontagesystem nach Anspruch 5 oder 6, **dadurch gekennzeichnet, dass** die Klebstoffaufnahmen (9, 10) durch eine Membran (8) getrennt nebeneinander angeordnet sind.

8. Schnellmontagesystem nach einem der vorhergehenden Ansprüche, **dadurch gekennzeichnet, dass** es scheiben- oder strangförmig ausgebildet ist und die Klebstoffaufnahme(n) (12,13) im Randbereich angeordnet ist (sind).

9. Schnellmontagesystem nach Anspruch 8, **dadurch gekennzeichnet, dass** es bei strangförmiger Ausbildung das Unterteilen in Einzelstücke ermöglichende klebstofffreie Zonen aufweist.

10. Schnellmontagesystem nach Anspruch 8, **dadurch gekennzeichnet, dass** es rund oder vieleckig ausgebildet ist.

11. Schnellmontagesystem nach einem der vorhergehenden Ansprüche, **dadurch gekennzeichnet, dass** die Haftklebekörper (2,3) folienartig ausgebildet sind.

12. Schnellmontagesystem nach einem der Ansprüche 1 bis 10, **dadurch gekennzeichnet, dass** die Haftklebekörper (18,19) als formhaltige Scheiben ausgebildet sind.

13. Schnellmontagesystem nach Anspruch 12, **dadurch gekennzeichnet, dass** zwischen den Haftklebekörpern Abstandsbegrenzer (21) vorgesehen sind, welche über eine Schnappvorrichtung verfügen.

14. Schnellmontagesystem nach einem der vorhergehenden Ansprüche, **dadurch gekennzeichnet, dass** die Haftklebekörper (2,3-18,19) außenseitig mit einer ablösbaren Abdeckung versehen sind.

15. Schnellmontagesystem nach einem der vorhergehenden Ansprüche, **dadurch gekennzeichnet, dass** dem Bereich des Klebstoffaustritts ein Mikro-Statik-Mischer (22) vorgelagert ist.

16. Schnellmontagesystem nach Anspruch 15, **dadurch gekennzeichnet, dass** es von einem Mikro-Statik-Mischer ringförmig umgeben ist.
